**Europäisches Patentamt**

**European Patent Office**

**Office européen des brevets**

(11) Veröffentlichungsnummer: **0 186 809 B1**

# EUROPÄISCHE PATENTSCHRIFT

(45) Veröffentlichungstag der Patentschrift: **06.05.92**

(21) Anmeldenummer: **85115518.4**

(22) Anmeldetag: **06.12.85**

(51) Int. Cl.⁵: **H04M 1/274**

(54) Telefonapparat mit Einrichtungen zur Speicherung und Darstellung von Kurzrufnummern.

(30) Priorität: **20.12.84 DE 3446606**

(43) Veröffentlichungstag der Anmeldung:
**09.07.86 Patentblatt 86/28**

(45) Bekanntmachung des Hinweises auf die
Patenterteilung:
**06.05.92 Patentblatt 92/19**

(84) Benannte Vertragsstaaten:
**DE**

(56) Entgegenhaltungen:
**EP-A- 0 075 120        WO-A-82/00392**
**WO-A-84/04219        DE-A- 3 309 480**
**GB-A- 2 030 423        US-A- 4 086 654**
**US-A- 4 475 013        US-H- 966 005**

(73) Patentinhaber: **SIEMENS AKTIENGESELL-
SCHAFT
Wittelsbacherplatz 2
W-8000 München 2(DE)**

(72) Erfinder: **Koch, Georg, Ing. grad.
Hannwöhrer Strasse 124
W-8070 Ingolstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf einen Telefonapparat mit Einrichtungen zur Speicherung und Darstellung von Kurzrufnummern sowie des Namens des Teilnehmers, der beim Abrufen der Kurzrufnummer zusammen mit dieser oder allein dargestellt wird.

Durch die Kurzrufnummern wird eine Vereinfachung und zugleich auch Beschleunigung des Wahlvorgangs beim Telefonieren erreicht. Bisher werden zu diesem Zweck Kurzrufnummernspeicher eingesetzt, in denen unter einer bis zu zweistelligen Zahl die maximal 16-stellige Telefonnummer abgespeichert wird. Auf diese Weise können bis zu 100 oft benötigte Rufnummern abgespeichert werden.

Bei dem Wahlverfahren kann entweder nach der Wahl der Kurzrufnummer die Teilnehmernummer automatisch gewählt werden, wobei parallel dazu eine Anzeige vorhanden sein kann, oder nach der Wahl der Kurzrufnummer die Teilnehmernummer zunächst in einer Anzeige dargestellt und erst nach Freigabe durch den Benutzer gewählt werden, um diesem die Möglichkeit der Überprüfung seiner Eingabe zu geben. Mit zunehmend größer werdenden Kurzrufnummerspeichern wird es jedoch für den Benutzer immer schwieriger, diese Überprüfung vorzunehmen, da er dazu sämtliche Nummern auswendig kennen müßte.

Aus der WO-A-8 404 219 ist ein Telefonapparat der eingangs beschriebenen Art bekannt, bei dem eine solche Überprüfung erleichtert wird durch Einrichtungen zur Speicherung und Darstellung von Kurzrufnummern sowie des Namens des Teilnehmers.

Der Erfindung liegt die Aufgabe zugrunde, eine Lösung anzugeben, die eine einfache Eingabe der Buchstaben in den Speicher und Überprüfung der gewählten Kurzrufnummer ermöglicht.

Diese Aufgabe wird gemäß der Erfindung dadurch gelöst, daß die Eingabe der Buchstaben in den Speicher derart erfolgt, daß mit einer ersten Taste des Telefonfeldes vorwärtsgerollt, mit einer zweiten Taste zurückgerollt wird, mit einer dritten Taste der momentan ausgewählte Buchstabe in den Speicher übertragen und mit einer vierten Taste die Eingabe beendet wird, und daß eine Aufnahme- und Leseeinrichtung für einen transportablen Datenträger mit gespeicherten Namen und Nummern vorgesehen sind.

Die Tasten zur Eingabe der Buchstaben können bei einem Tastentelefon beispielsweise die Tasten A, B, C und D sein. Durch eine Doppelbelegung bereits vorhandener Tasten wird damit das bei einer normalen Blocktastatur eines Telefons bestehende Problem gelöst, daß nicht für jeden Buchstaben eine Taste zur Verfügung steht.

Die im Telefonapparat vorgesehenen an sich bekannte Aufnahme und Leseeinrichtungen für einen transportablen Datenträger mit gespeicherten Namen und Nummern ermöglichen es, daß der transportable Datenträger persönlich beim Benutzer getragen und bei Bedarf in die verschiedenen Telefonapparate gesteckt werden kann. Dies hat den Vorteil, daß zum einen die relativ aufwendige Eingabe der Daten für verschiedene Telefone, z.B. Büro-, Privatanschluß und Auto nur einmal erfolgen muß, somit auch leichter auf dem neuesten Stand gehalten werden kann, und zum anderen von jedem Telefon, das über eine entsprechende Einrichtung verfügt, der Kurzrufnummernspeicher benutzt werden kann. Als Datenträger sind beispielsweise Magnetkarten, Chipkarten, EPROM's oder EEPROM's verwendbar.

Der Aufruf der Kurzrufnummern kann in der gleichen Weise erfolgen wie die vorstehend erwähnte Eingabe mit den vier Tasten, wobei durch eine Eindeutigkeitsprüfung der Aufruf beendet wird, sobald sichergestellt ist, daß nur noch eine eingespeicherte Rufnummer in Frage kommt. So wird nach Eingabe der Buchstaben "Ko" der Name "Koch" angezeigt, wenn im Speicher sich nur die Namen "Koch" und "Kurz" mit dem Anfangsbuchstaben "K" befinden.

## Patentansprüche

1. Telefonapparat mit Einrichtungen zur Speicherung und Darstellung von Kurzrufnummern sowie des Namens des Teilnehmers, der beim Abrufen der Kurzrufnummer zusammen mit dieser oder allein dargestellt wird, **dadurch gekennzeichnet,** daß die Eingabe der Buchstaben in den Speicher derart erfolgt, daß mit einer ersten Taste des Telefonfeldes vorwärtsgerollt, mit einer zweiten Taste zurückgerollt wird, mit einer dritten Taste der momentan ausgewählte Buchstabe in den Speicher übertragen und mit einer vierten Taste die Eingabe beendet wird, und daß eine Aufnahme- und Leseeinrichtung für einen transportablen Datenträger mit gespeicherten Namen und Nummern vorgesehen sind.

## Claims

1. Telephone set comprising devices for storing and displaying abbreviated dial codes and the name of the subscriber which, when the abbreviated dial code is called up, is displayed together with the latter or by itself, characterised in that the letters are input into the store in such a manner that a first key of the telephone pad is used for scrolling forward, a second key is used for scrolling backward, a third key is used for transferring the currently selected letter into the store and a fourth key is used for ending the input, and in that a recording and reading device is provided for a portable data carrier with stored names and codes.

**Revendications**

1. Appareil téléphonique comportant des dispositifs pour mémoriser et représenter des numéros d'appels abrégés ainsi que le nom de l'abonné qui, lors de l'appel du numéro d'appel abrégé, est représenté conjointement avec ce dernier ou bien seul, caractérisé par le fait que l'introduction des lettres dans la mémoire s'effectue de telle sorte qu'avec la première touche du clavier du téléphone, on exécute une exploration dans le sens d'avance, avec une seconde touche on exécute une exploration rétrograde, avec une troisième touche on transmet la lettre, sélectionnée à cet instant, à la mémoire, et avec une quatrième touche on interrompt l'introduction, et qu'un dispositif d'enregistrement et de lecture est prévu pour un support transportable de données contenant des noms et des numéros mémorisés.